# EUROPÄISCHE PATENTSCHRIFT

(11) **EP 3 800 114 B1**
(45) Veröffentlichungstag und Bekanntmachung des Hinweises auf die Patenterteilung: **07.12.2022**
(21) Anmeldenummer: 20199582.6
(22) Anmeldetag: 01.10.2020
(51) Int. Cl.: B62J 1/28, B62J 7/04, B62J 7/08, B62J 11/00

(54) **FAHRRAD, GEPÄCKSTÜTZE UND TRANSPORTSYSTEM**
BICYCLE, LUGGAGE SUPPORT AND TRANSPORT SYSTEM
BICYCLETTE, PORTE-BAGAGES ET SYSTÈME DE TRANSPORT

(30) Priorität: 01.10.2019 DE 102019126483
(43) Veröffentlichungstag der Anmeldung: 07.04.2021
(73) Patentinhaber: Schreiber, Karl, 15838 Am Mellensee (DE)
(72) Erfinder: Schreiber, Karl, 15838 Am Mellensee (DE)
(74) Vertreter: Müller, Wolfram Hubertus

(56) Entgegenhaltungen:
- EP-A1- 2 426 039
- AT-B- 151 373
- JP-A- 2007 276 519
- KR-A- 20160 025 836

## Beschreibung

Die Erfindung betrifft eine Gepäckstütze, ein Fahrrad mit einer solchen Gepäckstütze und ein Transportsystem.

Es stellt ein bekanntes Problem dar, dass ein Fahrradfahrer, der zum Transport von Utensilien einen Rucksack auf dem Rücken trägt, im Laufe der Fahrradfahrt eine verstärkte Schweißentwicklung am Rücken erfährt. Dies ist dem Umstand geschuldet, dass aufgrund des Rucksacks eine mangelnde Ventilation der Rückenpartie des Fahrradfahrers vorliegt. Abhängig von dem Gewicht des Rucksacks und der Länge der Fahrradfahrt kann das Tragen des Rucksacks auch zu Rückenschmerzen beim Fahrradfahrer führen.

Zur Reduzierung des Problems der Schweißentwicklung sind Rucksäcke bekannt, die durch ihre Formgebung und/oder definiert verlaufende Netze eine gewisse Ventilation zwischen dem Rücken des Fahrers und dem Hauptkörper des Rucksack bereitstellen.

Aus der EP 2 426 039 A1 ist es bekannt, eine Trägerstruktur am Sattel eines Fahrrads anzubringen, die annähernd auf der Höhe der Sitzfläche des Sattels ausgebildet und mit einer Stützfläche versehen ist, die als Stütze eines von dem Fahrer des Fahrrads getragenen Rucksacks dient.

Aus der AT 151 373 B ist, die alle Merkmale des Oberbegriffs des Anspruchs 1 offenbart, ist eine Rucksackstütze für Fahrräder bekannt, welche einen Muldenträger ausbildet, der der Abstützung eines Rucksacks dient. Der Muldenträger ist in seiner Höhe verstellbar ausgebildet.

Die JP 2007 276519 A offenbart eine Rucksackstütze, die sich ausgehend von der Sattelfläche nach hinten erstreckt und auf ihrer Oberseite Reibeelemente aufweist, um die Abstützung eines Gepäckstücks zu verbessern.

Die KR 2016 0025836 A offenbart eine Rucksackstütze, die an ihrem vom Sattel entfernten Ende einen Querarm ausbildet, der der Abstützung eines Gepäckstücks dient. Der vorliegenden Erfindung liegt die Aufgabe zugrunde, ein Transportsystem bereitzustellen, das in effektiver Weise eine Abstützung eines Rucksacks bereitstellt, der vom Fahrer eines Fahrrads getragen wird, wobei eine Rückenbelastung und/oder eine Schweißentwicklung am Rücken des Fahrers während der Fahrt weitgehend vermieden oder zumindest reduziert werden sollen.

Diese Aufgabe wird durch eine Gepäckstütze mit den Merkmalen des Anspruchs 1, ein Fahrrad mit den Merkmalen des Anspruchs 10 und ein Transportsystem mit den Merkmalen des Anspruchs 11 gelöst. Ausgestaltungen der Erfindung sind in den abhängigen Ansprüchen angegeben.

Danach sieht die vorliegende Erfindung eine Gepäckstütze vor, die umfasst:
- ein erstes Ende, das dazu vorgesehen und ausgebildet ist, mit dem Sitz oder Rahmen eines Fahrrads verbunden zu werden, und
- ein zweites Ende, das eine Stützanordnung ausbildet, die dazu vorgesehen und ausgebildet ist, bei Anordnung der Gepäckstütze an dem Sitz eines Fahrrads einen auf dem Rücken des Fahrers des Fahrrads angeordneten Rucksack während der Fahrt abzustützen.

Dabei sind in die Stützanordnung Verbindungsmittel integriert, die geeignet sind, in Verbindung mit entsprechenden Verbindungsmitteln in oder an dem abzustützenden Rucksack eine magnetische kraftschlüssige Verbindung oder eine Schnapp- oder Rastverbindung der Stützanordnung mit dem abzustützenden Rucksack bereitstellen.

Die vorliegende Erfindung beruht auf dem Gedanken, eine mit dem Sattel oder dem Rahmen verbundene Gepäckstütze bereitzustellen, an der sich der Rucksack während der Fahrt abstützt, so dass der Rucksack nicht durch die Schwerkraft eng am Körper des Fahrers anliegt, sondern sich stattdessen während der Fahrt mit einem Abstand zum Rücken ausrichtet. Während der Fahrt wird die Gepäcklast somit - anders als etwa bei einem Gepäckträger - von der Gepäckstütze getragen.

Dabei sieht die erfindungsgemäße Lösung vor, dass die Gepäckstütze über die Funktion einer reinen Abstützung hinaus zusätzlich eine lösbare Verbindung zwischen der Gepäckstütze und dem Rucksack bereitstellt, wobei die Verbindung über eine magnetische Kraftschlussverbindung bereitgestellt wird. Die Bereitstellung einer zusätzlichen Verbindung zwischen Gepäckstütze und Rucksack ist mit dem Vorteil verbunden, dass die Gefahr reduziert oder sogar eliminiert wird, dass der Rucksack bei Erschütterungen, wie zum Beispiel der Fahrt über einen Bordstein, sich von der Stützanordnung löst bzw. von dieser abgleitet. Die Sicherheit der durch die Gepäckstütze bereitgestellten Stützfunktion wird durch die magnetische kraftschlüssige Verbindung erhöht. Eine magnetische kraftschlüssige Verbindung ist dabei gleichzeitig in einfacher Weise lösbar, wenn die aufgewendete Kraft zur Trennung der Komponenten die magnetische Haltekraft übersteigt.

Ein weiterer, mit der Erfindung verbundener Vorteil besteht darin, dass die zwar lösbare, nach ihrer Bereitstellung dann jedoch starre Verbindung zwischen der Gelenkstütze und dem Rucksack, die durch die magnetische Kraftschlussverbindung bereitgestellt wird, den Rücken des Fahrers sicher und dauerhaft von dem Gewicht des Rucksacks entlastet.

Darüber hinaus erhöht die starre Verbindung zwischen der Gelenksstütze und dem Rucksack auch den Fahrkomfort, da zum einen der Schwerpunkt des Rucksacks gegenüber der Situation, in der der Rucksack am Rücken des Fahrers herunterhängt, höher angeordnet ist und zum anderen der Schwerpunkt des Rucksacks im Bezugssystem des Fahrrads sich nicht mehr abhängig von der Position des Fahrers verändert, sondern ortsfest ausgebildet ist.

Die Erfindung ermöglicht es einem Fahrer, ohne die nachteilige Konsequenz eines verschwitzten Rückens sein Gepäck immer dabei zu haben, ohne die Gefahr eines Verlustes oder eines Diebstahls.

Ein weiterer, mit der Erfindung verbundener Vorteil besteht darin, dass durch die Abstützung des Rucksacks an der Gepäckstütze ein höherer Schwerpunkt des Rucksacks bzw. des in diesem beförderten Gepäcks vorliegt. Hierdurch verbessert sich das Gleichgewichtsgefühl des Fahrers während der Fahrt und liegt ein insgesamt besserer Fahrkomfort vor.

Gegenüber Fahrradtaschen zum Transport von Gepäck besteht der Vorteil einer verbesserten Bequemlichkeit und Sicherheit, da das Gepäck immer am Körper getragen wird. Auch kann der Fahrer mit einer erhöhten Geschwindigkeit fahren, da ein Luftwiderstand durch Fahrradtaschen entfällt und der Rucksack aerodynamisch ausgebildet sein kann.

Es wird darauf hingewiesen, dass ein Rucksack im Sinne der vorliegenden Erfindung jedwedes Behältnis ist, dass der Fahrer eines Fahrrads auf seinem Rücken tragen kann. Es muss sich hierbei nicht um einen klassischen Rucksack mit Schultergurten und gegebenenfalls einem Bauchgurt oder Hüftgurt handeln. Beispielsweise ist ein Sack, der über einen Gurt am Oberkörper oder am Kopf eines Fahrers befestigbar ist und der entlang des Rückens des Fahrers herabhängt, ebenfalls ein Rucksack im Sinne der vorliegenden Erfindung.

Gemäß einer alternativen Ausgestaltung der Erfindung erfolgt die Verbindung zwischen der Gepäckstütze und dem Rucksack nicht über eine magnetische kraftschlüssige Verbindung, sondern oder eine lösbare Schnapp- oder Rastverbindung. Dabei sind zum einen an der Gepäckstütze und zum anderen am Rucksack miteinander korrespondierende Rastelemente bzw. Schnappelemente ausgebildet, die miteinander in Eingriff treten können. Die in Bezug auf eine magnetische formschlüssige Verbindung erläuterten Vorteile gelten auch für eine Schnapp- oder Rastverbindung.

Gemäß einer Ausgestaltung der Erfindung umfasst der Sitz in typischer Ausgestaltung einen Sattel und eine Sattelstütze. Die Sattelstütze ist mit dem Rahmen des Fahrrads verbunden. Es ist vorgesehen, dass die Gepäcksstütze an ihrem einen Ende mit der Sattelstütze verbunden ist und sich ausgehend von der Sattelstütze nach hinten erstreckt. Nach diesem Erfindungsaspekt erfolgt die Verbindung der Gepäckstütze somit mit der Sattelstütze.

Die Erfindung ist hierauf jedoch nicht beschränkt. Alternativ kann vorgesehen sein, dass die Gepäckstütze sich ausgehend vom Sattel nach hinten erstreckt, also unmittelbar am Sattel befestigt ist. Dabei kann des Weiteren vorgesehen sein, dass die Gepäckstütze einteilig mit dem Sattel ausgebildet ist und sich von der Hauptsitzfläche des Sattels nach hinten erstreckt.

Gemäß einer weiteren Ausgestaltung ist die Gepäckstütze mit dem Rahmen verbunden. Ein Ausführungsbeispiel hierzu sieht vor, dass sie mit der Hinterradnabe verstrebt ist.

Die Stützanordnung, die der Abstützung eines Rucksacks dient, kann auf vielfältige Weise ausgebildet sein. Eine Ausgestaltung hierzu sieht vor, dass die Stützanordnung eine plan ausgebildete und sich horizontal erstreckende Stützfläche ausbildet. Dabei kann vorgesehen sein, dass die Stützfläche polygonal, elliptisch oder kreisförmig ausgebildet ist.

Gemäß einer alternativen Ausgestaltung bildet die Stützanordnung eine Stützfläche aus, die in Richtung eines abzustützenden Rucksacks konkav oder alternativ konvex ausgebildet ist. Auch bei dieser Ausführungsvariante kann die Stützfläche beispielsweise polygonal, elliptisch oder kreisförmig ausgebildet sein. Durch die konkave oder konvexe Ausbildung der Stützfläche erfolgt automatisch eine gewisse Zentrierung des abzustützenden Rucksacks an der Stützfläche und wird das Risiko reduziert, dass der Rucksack sich beispielsweise bei auftretenden Erschütterungen von der Gepäckstütze löst.

Eine Ausführungsvariante hierzu sieht vor, dass ein Magnet oder ein magnetisierbares Material in die plan oder konkav/konvex ausgebildete Stützfläche integriert ist. Dabei kann vorgesehen sein, dass die Stützfläche selbst um den Magneten oder das magnetisierbares Material herum nicht aus einem magnetischen oder magnetisierbares Material besteht und beispielsweise aus Holz oder einem Kunststoff gebildet ist. Dies erlaubt eine exakte Positionierung des Magneten oder magnetisierbares Materials gegenüber einem Magneten oder magnetisierbaren Material, der/das im Rucksack ausgebildet ist.

Um eine möglichst genaue Positionierung zu ermöglichen, kann dabei vorgesehen sein, dass der Magnet bzw. das magnetisierbare Material der Stützanordnung eine Oberfläche aufweist, die höchstens 20 % der Gesamtoberfläche von Stützfläche und Magnet bzw. magnetisierbarem Material.

Weiter kann vorgesehen sein, dass die Stützanordnung eine Stützfläche ausbildet, die einen erhobenen Rand aufweist, um die Gefahr eines Abrutschens des abzustützenden Rucksacks zu reduzieren.

Die Erfindung sieht eine kraftschlüssige Verbindung zwischen der Stützanordnung und dem Rucksack unter Verwendung mindestens eines Magneten vor. Dabei ist in einer Ausführungsvariante vorgesehen, dass in die Stützanordnung ein Magnet integriert ist, der dazu vorgesehen und ausgebildet ist, mit einem in dem abzustützen Rucksack angeordneten Magneten oder magnetisierbaren Material zur Verbindung des Rucksacks mit der Gepäckstütze zusammen zu wirken. Alternativ verhält es sich umgekehrt, d. h. es ist in die Stützanordnung ein magnetisierbares Material integriert, das dazu vorgesehen und ausgebildet ist, mit einem in oder an dem abzustützenden Rucksack angeordneten Magneten zur Verbindung des Rucksacks mit der Gepäckstütze zusammen zu wirken.

Die Anordnung eines Magneten bzw. eines magnetisierbares Materials in der Stützanordnung kann dabei mit den Ausführungsvarianten einer plan oder konkav ausgebildeten Stützfläche kombiniert werden.

Es werden somit entweder zwei Magnete eingesetzt - ein Magnet in der Stützanordnung und ein Magnet im Rucksack - oder wird alternativ lediglich ein Magnet eingesetzt, der entweder im Rucksack oder in der Stützanordnung angeordnet ist, wobei in letzterem Fall der verwendete Magnet mit einem magnetisierbaren Material, das in der jeweils anderen Komponente angeordnet ist, zusammenwirkt. Das magnetisierbare Material ist dabei beispielsweise ein ferromagnetisches Element, das bevorzugte die gleiche Fläche und die gleiche Form wie der verwendete Magnet besitzt.

Wie Versuche ergeben haben, ist dabei von besonderem Vorteil eine Anordnung, bei der nur in die Stützanordnung der Gepäckstütze ein Magnet integriert ist, während der Rucksack lediglich eine magnetisierbare Struktur, beispielsweise eine ferromagnetische Metallplatte oder andere ferromagnetische Struktur umfasst, die von dem Magnet der Gepäckstütze angezogen wird, wobei sich die beiden Elemente zu einer magnetischen kraftschlüssigen Verbindung verbinden.

Alternativ ist nur in den Rucksack ein Magnet integriert, während die Gepäckstütze eine magnetisierbare Struktur, beispielsweise eine ferromagnetische Metallplatte oder andere ferromagnetische Struktur umfasst. In beiden Fällen ist nur ein Magnet vorgesehen, der mit einer magnetisierbaren Struktur, die nicht selber ein Magnet ist, zusammen wirkt.

Bei dem Magneten handelt es sich beispielsweise um einen Neodym-Magnet, der beispielsweise einen Durchmesser von 30 mm und eine Dicke von 5 mm aufweist. Dabei kann vorgesehen sein, dass der Magnet rückseitig gekapselt ist, so dass die magnetische Feldstärke in eine Richtung fokussiert wird und in diese Richtung dementsprechend stärker ist.

Eine weitere Ausgestaltung sieht eine Anordnung mit zwei gegenpolig angeordneten Neodym-Magneten beispielsweise mit einem Durchmesser von 30 mm und einer Dicke von 5 mm vor. Dabei befindet sich der eine Magnet im Rucksack und der andere Magnet an der Gepäckstütze. Die Anordnung von zwei Magneten hat den Vorteil, dass die Magnete selbstzentrierend sind und darüber hinaus die Haltekräfte erhöhen. Eine vorteilhafte Ausbildung besteht dabei darin, die Magnete in magnetisierbarem Material, wie zum Beispiel Stahl rückseitig zu kapseln, was die magnetische Feldstärke weiter erhöht und gleichzeitig eine elegante Möglichkeit darstellt, die Magnete ortsfest zu adaptieren.

Es wird weiter darauf hingewiesen, dass in die Gepäckstütze und/oder in den Rucksack grundsätzlich auch eine Mehrzahl von Magneten bzw. eine Mehrzahl von Magneten und entsprechend zugeordneten magnetisierbaren Materialien integriert sein können.

Eine Ausgestaltung der Erfindung sieht vor, dass der mindestens eine Magnet derart ausgebildet ist, dass die magnetische kraftschlüssige Verbindung mit den Verbindungsmitteln des abzustützenden Rucksacks eine Haltekraft von mindestens 20 kg, insbesondere von mindestens 30 kg bereitstellt. Natürlich können abhängig von dem gewählten Magneten auch höhere Haltekräfte von beispielsweise 40 kg oder 50 kg realisiert werden.

Sofern die Stützfläche der Stützanordnung plan ausgebildet ist, sieht eine Ausführungsvariante vor, dass die Stützfläche in der Ansicht von oben als Polygon ausgebildet ist, das eine Vorderkante, eine Hinterkante, zwei Seitenkanten sowie jeweils zwischen Vorderkante und Seitenkante sowie zwischen Hinterkante und Seitenkante eine schräg verlaufenden Kante umfasst. Hierdurch wird eine Stützfläche bereitgestellt, die zur Seite hin wenig hervorsteht und aerodynamisch ausgebildet ist.

Gemäß einer weiteren Ausführungsvariante ist die Stützanordnung um eine Achse quer zur Längsachse des Fahrrads kippbar bzw. schwenkbar ausgebildet. Dies ermöglicht es, dass sich die Abstützung bei einer Bewegung des Fahrers und damit des Rucksacks entsprechend adaptiert. Die Bewegungsfreiheit bei einem Positionswechsel des Fahrers wird erhöht, ohne dass der Positionswechsel die Gefahr eines Lösens des Rucksacks von der Gepäckstütze mit sich bringt. Dabei ist es wichtig, dass die Stützanordnung nur in einem definierten Winkelbereich kippbar ist und an den Grenzen des Winkelbereichs anschlägt. Der Winkelbereich, über den die Stützanordnung kippbar ist, liegt beispielsweise bei weniger als 90°, beispielsweise bei 60° oder 30°.

Eine weitere Ausgestaltung sieht vor, dass die Gepäckstütze mindestens eine Auflagefläche oder mindestens einen Auflagepunkt für den abzustützenden Rucksack aufweist. Dabei können auch mehrere Auflageflächen oder Auflagepunkte vorgesehen sein.

Gemäß einer weiteren Ausführungsvariante ist die Stützanordnung oberhalb der Ebene eines Gepäckträgers des Fahrrads angeordnet. Bei der erfindungsgemäßen Gepäckstütze handelt es sich nicht um einen Gepäckträger. Ein Gepäckträger ist nicht derart angeordnet, dass sich ein auf dem Rücken des Fahrers angeordneter Rucksack an ihm abstützen kann. Sofern das Fahrrad einen Gepäckträger aufweist, ist die Gepäckstütze derart angeordnet, dass die Stützanordnung der Gepäckstütze sich oberhalb des Gepäckträgers befindet. Sofern das Fahrrad keinen Gepäckträger aufweist, ist die Gepäckstütze derart angeordnet, dass sie sich oberhalb der Ebene befindet, in der sich ein Gepäckträger erstrecken würde. Beispielsweise erstreckt sich die Stützanordnung in der Höhe des Sattels oder sogar in einer Ebene oberhalb des Sattels.

Eine bevorzugte Ausgestaltung sieht dabei vor, dass die Stützanordnung sich nicht oberhalb der Ebene des Sattels erstreckt, insbesondere die Stützfläche sich nicht oberhalb der durch den obersten Punkt des Sattels gehenden horizontalen Ebene erstreckt. Anderenfalls würde ein Aufsteigen auf das Fahrrad bzw. Absteigen vom Fahrrad jedenfalls bei einem Herrenrad durch die Stützanordnung erschwert.

Die Höhe der Stützanordnung kann variabel sein. Eine Einstellbarkeit der Höhe der Stützanordnung kann sich zum einen über eine geeignete Wahl des Verbindungspunkts der Verbindung zwischen der Gepäckstütze und dem Sitz bzw. dem Rahmen ergeben. Zum anderen kann in Ausgestaltungen vorgesehen sein, dass die Gepäckstütze Mittel umfasst, über die die Höhe der Stützanordnung einstellbar ist, beispielsweise eine Teleskopschiene und/oder ein oder mehrere Gelenke.

Die gemäß der vorliegenden Erfindung vorgesehene Gepäckstütze stellt einen Bestandteil eines Fahrrads dar. Sie kann dabei originärer Bestandteil des Fahrrads sein, der bereits vom Hersteller des Fahrrads montiert wird. Dabei ist auch möglich, dass die Gepäckstütze einteilig mit dem Fahrrad ausgebildet ist, beispielsweise einstückig mit dem Sattel oder der Sattelstütze ausgebildet ist.

Es ist jedoch ebenfalls möglich, dass die erfindungsgemäße Gepäckstütze im Nachhinein an ein Fahrrad montiert wird.

In einem zweiten Erfindungsaspekt betrifft die vorliegende Erfindung ein Fahrrad mit einer erfindungsgemäßen Gepäckstütze.

In einem dritten Erfindungsaspekt betrifft die Erfindung ein Transportsystem, das ein erfindungsgemäßes Fahrrad und einen Rucksack umfasst. Das Fahrrad umfasst eine Gepäckstütze mit einer Stützanordnung. Dabei sind das Fahrrad und der Rucksack dazu ausgebildet, derart zusammenzuwirken, dass die Stützanordnung und der Rucksack über eine magnetische kraftschlüssige Verbindung oder eine Schnapp- oder Rastverbindung miteinander verbindbar sind. Dabei stützt die Gepäckstütze den auf dem Rücken des Fahrers des Fahrrads angeordneten Rucksack oder ein mit diesem verbundenes Stützelement während der Fahrt ab.

Die in Bezug auf die Gepäckstütze beschriebenen vorteilhaften Ausgestaltungen gelten auch für das Transportsystem. Zusätzlich kann der Rucksack nachfolgend erläuterte vorteilhafte Ausgestaltungen aufweisen, die ein Zusammenwirken des Rucksacks mit der Gepäckstücke in besonders effektiver Weise ermöglichen.

So sieht eine Ausgestaltung vor, dass sowohl die Stützanordnung der Gepäckstütze als auch der Rucksack jeweils Verbindungsmittel zur Verbindung der Gepäckstütze mit dem Rucksack aufweisen. Bei den Verbindungsmitteln handelt es sich beispielsweise jeweils um einen Magnet, der in die Stützvorrichtung der Gepäckstütze und in den Rucksack integriert ist. Statt eines Magneten kann in den Rucksack oder in die Stützanordnung ein magnetisierbares Material integriert sein. Der Magnet oder das magnetisierbare Material ist dabei bevorzugt mittig im Bodenbereich in den Rucksack integriert. Hierzu kann beispielsweise eine entsprechende Tasche in den Rucksack integriert sein, die den Magneten oder das magnetisierbare Material aufnimmt. Die Tasche kann an der Innenseite oder an der Außenseite des Rucksacks ausgebildet sein.

Eine weitere Ausgestaltung sieht vor, dass der Rucksack an seinem unteren, der Gepäckstütze zugewandten Ende eine Versteifung aufweist, die dem unteren Ende des Rucksacks eine definierte Form verleiht, die mit einer entsprechenden Form der Stützanordnung der Gepäckstütze korrespondiert. Der Rucksack und die Gepäckstütze bilden somit in dem Bereich, in dem sie aneinander anliegen, eine zueinander korrespondierende Form aus, die beispielsweise konkav/konvex oder konvex/Konkav ist.

Beispielsweise ist der Rucksack an seinem unteren Ende konvex ausgebildet und weist eine Auflagefläche der Stützanordnung eine entsprechend konkav ausgebildete Form auf. Insbesondere kann vorgesehen sein, dass der Rucksack an seinem unteren Ende eine konvexe Kalotte ausbildet, die auf einer konkaven Kalotte der Gepäckstütze aufliegt.

Die Versteifung kann durch das Material des Rucksacks bereitgestellt werden, beispielsweise wenn der Rucksack im Bodenbereich eine Kalotte ausbildet. Alternativ wird die Versteifung durch ein gesondertes Teil bereitgestellt, dass in den Rucksack eingelegt und beispielsweise über im Rucksack vorhandene Gurte, wie zum Beispiel den Beckengurt fixiert wird.

Eine Ausführungsvariante hierzu sieht vor, dass die Versteifung durch Profile, Stangen oder andere eingesetzte Teile gebildet ist. Diese können ein geeignet geformtes Gestell bilden. Beispielsweise sind zwei längliche Teile winklig zueinander angeordnet und bilden hierdurch eine Winkelversteifung zur Stabilisierung des Rucksacks. Beispielsweise ist in den Rucksack eine Winkelversteifung integriert, die zwei Versteifungsschenkel umfasst, die bevorzugt einen Winkel von 90° zueinander ausbilden. Der eine Versteifungsschenkel erstreckt sich in Längsrichtung des Rucksacks und der andere Versteifungsschenkel steht im Bodenbereich des Rucksacks von dem einen Versteifungsschenkel ab und definiert dadurch eine geeignete Form der Unterseite des Rucksacks.

Eine Ausgestaltung des Transportsystems sieht vor, dass in die Stützanordnung ein Magnet und in den Rucksack ein Magnet oder ein magnetisierbares Material integriert ist, die zur Verbindung des Rucksacks mit der Gepäckstütze zusammenwirken, oder umgekehrt.

Die jeweils zusammenwirkenden Elemente Magnet und Magnet bzw. Magnet und magnetisierbares Material weisen bevorzugt die gleiche Größe auf, so dass eine Zentrierung zwischen der Stützanordnung und dem Rucksack über die Magnete bzw. magnetisierbaren Materialien in effektiver Weise erfolgen kann. Sie sind beispielsweise jeweils als kreisförmige oder rechteckförmige Elemente ausgebildet.

Dabei kann vorgesehen sein, dass der in den Rucksack integrierte Magnet oder das in den Rucksack integrierte magnetisierbare Material in eine Platte integriert ist, die an der Unterseite des Rucksacks außen an diesem befestigt ist. Bei einer solchen Platte handelt es sich beispielsweise um einen Versteifungsschenkel des erwähnten Gestells, das in den Rucksack integriert ist, wobei der Versteifungsschenkel sich plan am unteren Ende des Rucksacks erstreckt. Das magnetisierbares Material liegt dabei in Form eines magnetisierbaren Elementes, beispielsweise eines ferromagnetischen Elementes vor, dass bevorzugt in Form und Größe der Oberfläche dem zugeordneten Magneten entspricht.

Die Platte ist dabei ebenso wie die Stützfläche der Stützanordnung bevorzugt aus einem nicht magnetischen und nicht magnetisierbaren Material gebildet, so dass vergleichsweise kleine Bereiche in der Platte und in der Stützfläche den jeweiligen Magneten bzw. das magnetisierbare Element bilden, wodurch ein höherer Grad an Ausrichtung und Zentrierung zwischen dem Rucksack und der Gepäckstütze erreicht werden kann.

Gemäß einer weiteren Ausgestaltung der Erfindung umfasst der Rucksack zwei Schultergurte, die jeweils einen Gummizug umfassen, über den der Schultergurt bei Angreifen einer Kraft verlängert wird. Dies ermöglicht, dass die Abstützung des Rucksacks an der Gepäckstütze aufrechterhalten bleibt, wenn der Fahrer während der Fahrt aus dem Sattel geht. Ein solches "aus dem Sattel gehen" führt lediglich zu einer Verlängerung der Schultergurte, ohne dass der Rucksack von der Gepäckstütze angehoben wird und dann vom Fahrer getragen werden muss.

Weitere Aspekte der Erfindung sehen vor, dass der Rucksack in dem Sinne aerodynamisch geformt ist, dass er gegenüber dem Körper des Fahrers keinen vergrößerten Luftwiderstand bereitstellt. Eine aerodynamische Optimierung des Rucksacks in Verbindung mit der erfindungsgemäßen Abstützung des Rucksacks an einer Gepäckstütze kann sogar dazu führen, dass das Fahrrad bei gleichem Kraftaufwand schneller fährt als ohne Gepäck. Dies wiederum ist vorteilhaft bei Elektrofahrrädern, da aufgrund einer Schonung des Akkumulators die Reichweite verlängert wird. Auch ist dies beispielsweise für Kurierfahrer von Vorteil.

Zwecks Bereitstellung einer aerodynamischen Form kann der Rucksack beispielsweise als Hartschalenrucksack ausgebildet sein, um z.B. Beispiel einen aerodynamisch ungünstigen, laminaren Strömungsabriss zu verhindern. Damit liegt ein deutlicher aerodynamischer Vorteil beispielsweise gegenüber Radtaschen vor, die die Windangriffsfläche vergrößern. Eine solche Ausgestaltung ist besonders von Vorteil bei langen und schnellen Radfahrten.

Die magnetische kraftschlüssige Verbindung ist beispielsweise derart ausgebildet, dass sie eine Haltekraft von mindestens 20 kg, insbesondere von mindestens 30 kg bereitstellt.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel eines Fahrrads mit einer erfindungsgemäßen Gepäckstütze, wobei der Fahrer in einer aufrechten Position dargestellt ist;
- Figur 2: das Fahrrad der Figur 1, wobei der Fahrer in einer vorgebeugten Position dargestellt ist;
- Figur 3: schematisch eine vergrößerte Darstellung eines ersten Ausführungsbeispiels einer Gepäckstütze in einer Seitenansicht und in Draufsicht, wobei die Gepäckstütze eine plane Stützfläche mit einem Magneten aufweist;
- Figur 4: schematisch eine vergrößerte Darstellung eines zweiten Ausführungsbeispiels einer Gepäckstütze in Seitenansicht, wobei die Gepäckstütze eine konkave Auflagefläche ausbildet;
- Figur 5: schematisch eine vergrößerte Darstellung eines nicht beanspruchten Ausführungsbeispiels einer Gepäckstütze in Seitenansicht, wobei die Gepäckstütze eine konische Vertiefung aufweist;
- Figur 6: schematisch einen Rucksack, der zur Abstützung an einer erfindungsgemäßen Gepäckstütze geeignet ist, wobei in den Rucksack eine Winkelversteifung integriert ist;
- Figur 7: schematisch eine vergrößerte Darstellung eines vierten Ausführungsbeispiels einer Gepäckstütze in Seitenansicht, wobei die Gepäckstütze ein Kippgelenk aufweist;
- Figur 8: einen Trageriemen eines Rucksacks, der zur Abstützung an einer erfindungsgemäßen Gepäckstütze geeignet ist, wobei der Trageriemen einen Gummizug aufweist, über den der Schultergurt bei Angreifen einer Kraft verlängert wird;
- Figur 9: eine Ansicht von vorne eines Fahrrads gemäß der Figuren 1 und 2 und eines einen Rucksack tragenden Fahrers;
- Figur 10: in perspektivischer Darstellung ein weiteres Ausführungsbeispiel einer mit einem Sattel verbundenen Gepäckstütze, wobei die Gepäckstütze eine plane Stützfläche und einen in die Stützfläche integrierten Magneten aufweist;
- Figur 11: eine perspektivische Seitenansicht des Ausführungsbeispiels der Figur 10;
- Figur 12: eine Ansicht von unten auf einen Rucksack, an dessen Unterseite eine Platte montiert ist, in die ein magnetisierbares Element integriert ist;
- Figur 13: die Gepäckstütze der Figuren 10 und 11 und den Rucksack der Figur 12 in einer ersten Relativposition, in der Gepäckstütze und Rucksack voneinander beabstandet sind;
- Figur 14: die Gepäckstütze der Figuren 10 und 11 und den Rucksack der Figur 12 in einer zweiten Relativposition, in der Gepäckstütze und Rucksack aufeinander ausgerichtet sind; und
- Figur 15: die Gepäckstütze der Figuren 10 und 11 und den Rucksack der Figur 12 in einer dritten Relativposition, in der Gepäckstütze und Rucksack miteinander verbunden sind.

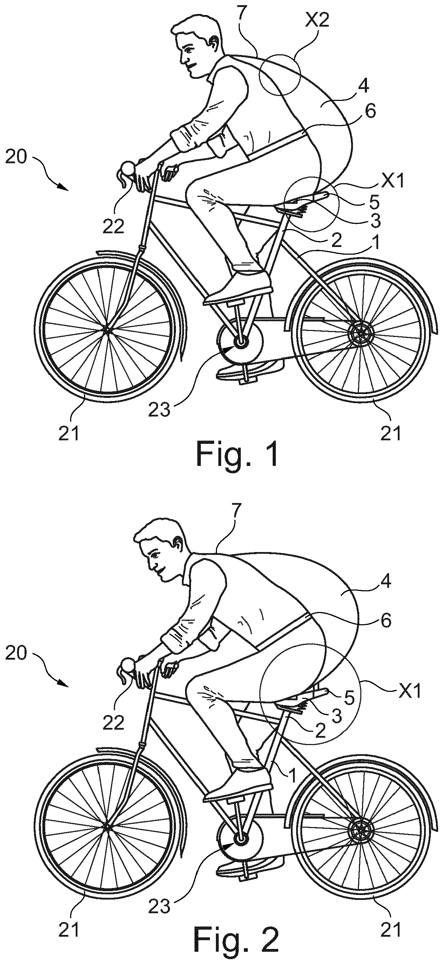

Die Figur 1 zeigt ein Fahrrad 20, das in an sich bekannter Weise einen Rahmen 1, zwei Räder 21, einen Lenker 22 einen Antrieb 23 und einen Sitz umfasst. Der Antrieb 23 erfolgt im dargestellten Beispiel über Pedale und eine Kette. Grundsätzlich kann der Antrieb jedoch auch elektrisch oder motorisch sein. Das Fahrrad 20 kann als nur durch Muskelkraft angetriebenes Fahrrad oder als elektrisches Fahrrad ausgebildet sein.

Der Sitz besteht aus einem Sattel 3 und einer Sattelstütze 2. Die Sattelstütze 2 dient der Verbindung des Sattels 3 mit dem Rahmen 1.

Mit dem Sitz 3 ist eine Gepäckstütze 5 verbunden, die sich vom Sitz nach hinten erstreckt. Die Gepäckstütze 5 kann am Sattel 3 oder an der Sattelstütze 2 befestigt sein. In einer Ausführungsvariante ist vorgesehen, dass die Gepäckstütze 5 einstückig mit dem Sattel 3 oder mit der Sattelstütze 2 ausgebildet ist.

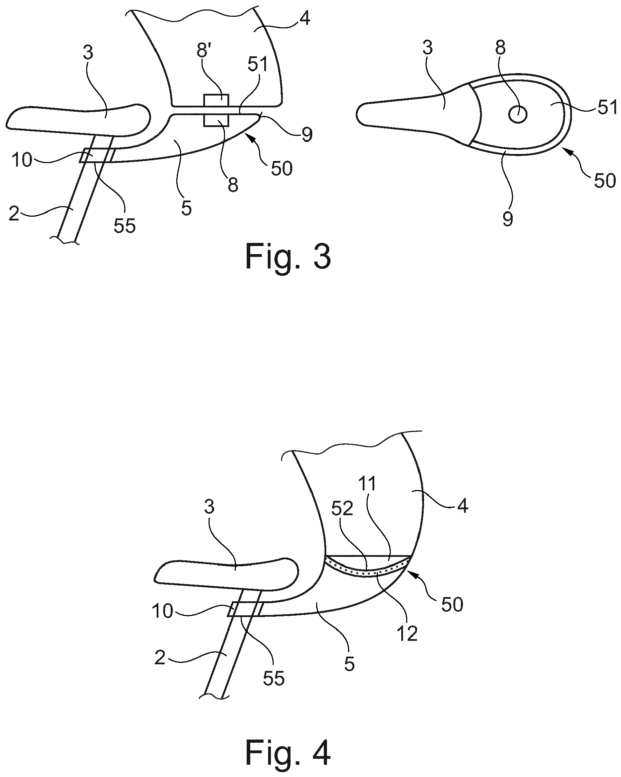

Die Sattelstütze 5 dient der Abstützung eines Rucksacks 4, den der Fahrer des Fahrrads 20 auf seinem Rücken trägt, wie anhand der Figuren 3-7 im Einzelnen erläutert wird. Der Rucksack 4 umfasst zwei Schultergurte 7 und optional einen Bauchgurt bzw. Hüftgurt 6.

Die Figur 1 zeigt den Fahrer des Fahrrads 20 in aufrechter Position. Dabei stützt sich der Rucksack 4 an der Gepäckstütze 5 ab. Damit braucht der Fahrer das Gewicht des Rucksacks 4 während der Fahrt nicht mehr zu tragen. Dementsprechend löst sich der Rucksack 4 von einer unmittelbaren Anlage am Rücken des Fahrers und es entsteht ein Spalt zwischen dem Rücken des Fahrers und dem Rucksack 4, der eine Ventilation des Rückens des Fahrers ermöglicht.

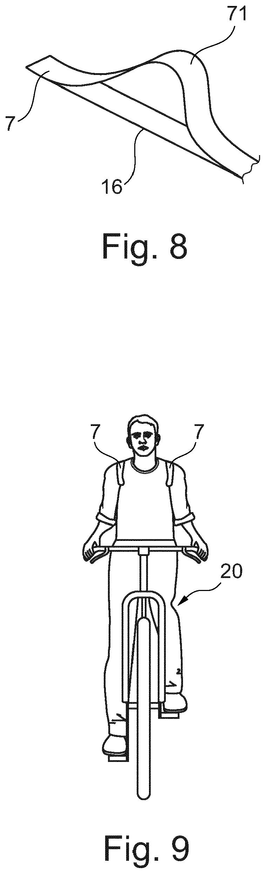

In der Figur 2 ist der Fahrer in einer vorgebeugten bzw. gebückten Position dargestellt, in der der Luftwiderstand des Fahrers reduziert ist. Dabei ist vorgesehen, dass der Rucksack 4 auch in der vorgebeugten Position an der Auflage 5 aufliegt. Hierzu kann beispielsweise vorgesehen sein, dass der Schultergurt sich bei einer vorgebeugten Position des Fahrers verlängert, ohne dabei das Gepäckgewicht aufnehmen zu müssen, wie anhand der Figur 8 erläutert wird.

Alternativ kann vorgesehen sein, dass der Rucksack 4 in der vorgebeugten Position des Fahrers zumindest noch über Verbindungsmittel (nicht gesondert dargestellt) wie zum Beispiel Bänder oder Gummis mit der Gepäckstütze 5 verbunden ist, so dass er bei einer erneuten aufrechten Position des Fahrers erneut durch die Gepäckstütze 5 abgestützt wird.

Die Figuren 3-5 und 7 sowie 10-15 zeigen Ausführungsvarianten des Bereichs X1 der Figuren 1 und 2 bzw. der Gepäckstütze 5.

Die Figur 3 zeigt ein Ausführungsbeispiel einer Gepäckstütze 5 in Seitenansicht und in Draufsicht. Die Gepäckstütze 5 weist ein vorderes Ende 55 auf, an dem sie mittels einer Befestigung 10 an der Sattelstütze 2 unterhalb des Sattels 3 befestigt ist. Ausgehend von der Befestigung 10 erstreckt sich die Gepäckstütze 5 nach hinten und bildet dort eine Stützanordnung 50 aus, die der Abstützung des Rucksacks 4 dient.

Die Stützanordnung 50 weist eine plan ausgebildete Stützfläche 51 auf. Diese kann von einem Rand 9 umgeben sein, der erhöht ist, um ein Abrutschen oder Verkippen des auf der Stützfläche 51 anliegenden Rucksacks 4 zu vermeiden.

Die Stützfläche 51 ist rund ausgebildet und kann näherungsweise kreisförmig oder elliptisch ausgebildet sein. Sie ist dabei derart geformt, dass sie in der Ansicht von oben stetig und ohne Vorsprünge in den Sattel 3 übergeht, so dass keine seitlichen Vorsprünge oder Kanten vorhanden sind, an denen ein Fahrer sich verletzen könnte.

Die Stützfläche 51 erstreckt sich zumindest näherungsweise horizontal, damit sie geeignet ist, den Rucksack 4 sicher abzustützen.

Mittig in der Stützfläche 51 ist ein Magnet 8 angeordnet. Der Magnet 8 interagiert mit einem Magneten 8' (oder alternativ einem magnetisierbaren Material), der im unteren Bereich des Rucksacks 4 angeordnet ist. Beispielsweise ist der Magnet 8' in einer Tasche angeordnet, die der Rucksack 4 an seinem unteren Ende ausbildet. Über die Magneten 8, 8' erfolgt eine exakte Positionierung und Verbindung des Rucksacks 4 mit der Stützanordnung 50 bzw. der Gepäckstütze 5, wobei durch die Magnetkopplung ein Schutz gegen ein Verschieben oder Lösen des Rucksacks 4 von der Gepäckstütze 5 erfolgt.

Alternativ kann vorgesehen sein, dass das in die Stützfläche 51 integrierte Element 8 nicht einen Magneten bildet, sondern ein magnetisierbares Element, beispielsweise eine ferromagnetische Platte oder eine ferromagnetisches zylindrisches Element, und ein Magnet ausschließlich in oder am Rucksack 4 angeordnet ist.

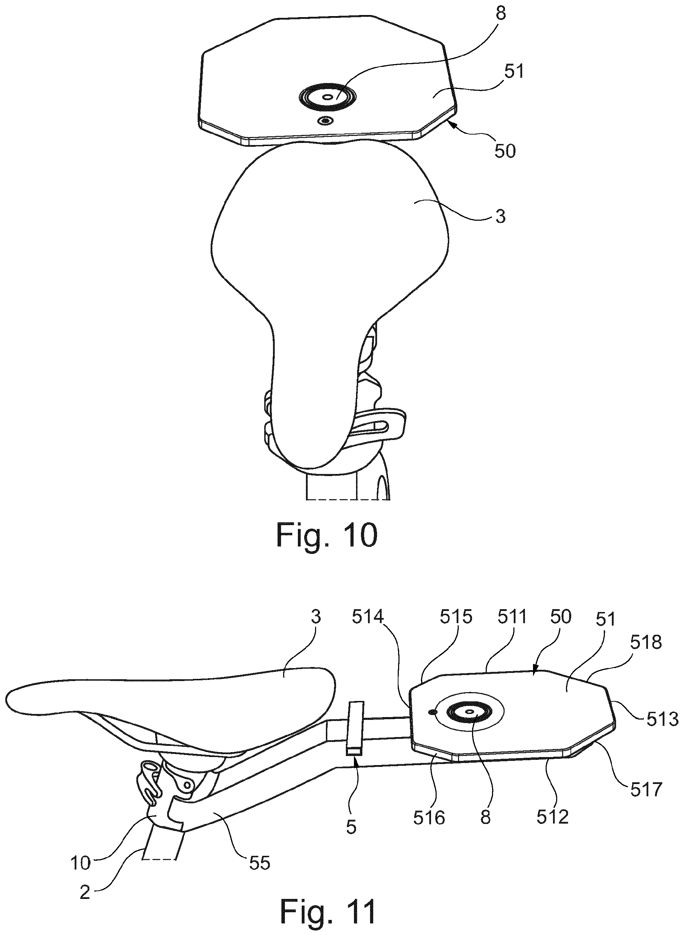

Die Figuren 10-15 zeigen ein weiteres Ausführungsbeispiel, das vom grundsätzlichen Aufbau her dem Ausführungsbeispiel der Figur 3 entspricht. So ist gemäß den Figuren 10 und 11 eine an einer Sattelstütze 2 befestigte Gepäckstütze 5 vorgesehen, deren vorderes Ende 55 mittels einer Befestigung 10 an der Sattelstütze 2 befestigt ist und die nach hinten eine Stützanordnung 50 ausbildet, die eine plane, horizontal ausgerichtete Stützfläche 51 aufweist.

In die Stützfläche 51 ist ein kreisförmiger Magnet 8 integriert, wobei die Oberfläche des Magneten 8 mit der Stützfläche 51 fluchtet, diese also eine gemeinsame Ebene bilden. Der Magnet 8 ist bezogen auf die Querrichtung des Fahrrads mittig angeordnet. Die kreisförmige Form des Magneten 8 ist lediglich beispielhaft zu verstehen. Alternativ kann der Magnet 8 beispielsweise als Rechteck oder allgemein als Polygon ausgebildet sein. Es wird darauf hingewiesen, dass die Oberfläche, die der Magnet 8 einnimmt, deutlich kleiner ist als die Oberfläche der Stützfläche 51. Beispielsweise beträgt die Oberfläche des Magnetes maximal 20 % der Gesamtfläche von Magnet und Stützfläche. Ein vergleichsweise kleiner Magnet 8 erlaubt eine genauere Positionierung im Hinblick auf ein im Rucksack angeordnetes magnetisches oder magnetisierbares Element.

Die Stützfläche 51 besteht aus einem nicht magnetischen und nicht magnetisierbares Material, beispielsweise aus Holz oder einem Kunststoff. Auch dies dient einer genauen Positionierung im Hinblick auf einen Rucksack, da die magnetische Kraft von einer vergleichsweise kleinen Fläche ausgeht.

Die Stützfläche 51 der Figuren 10 und 11 weist anders als die Stützfläche der Figur 3 in der Ansicht von oben eine polygonale Form auf. Dabei bildet sie zwei Seitenkanten 511, 512, eine Vorderkante 514, eine Hinterkante 513 sowie eine Vielzahl von schräg verlaufenden Kanten 515, 516, 517, 518, die sich jeweils zwischen einer Längskante und der Vorderkante bzw. Hinterkante erstrecken. Hierdurch wird eine Form bereitgestellt, die aufgrund der parallelen Längskanten 511, 512 zur Seite hin eine relativ geringe Breite besitzt (anders als beispielsweise eine kreisförmige Form) und die gleichzeitig durch die abgeschrägten Kanten zwischen Vorderkante 513 und den Längskanten 511, 512 sowie zwischen Hinterkante 514 und den Längskanten 511, 512 aerodynamisch vorteilhaft ausgebildet ist.

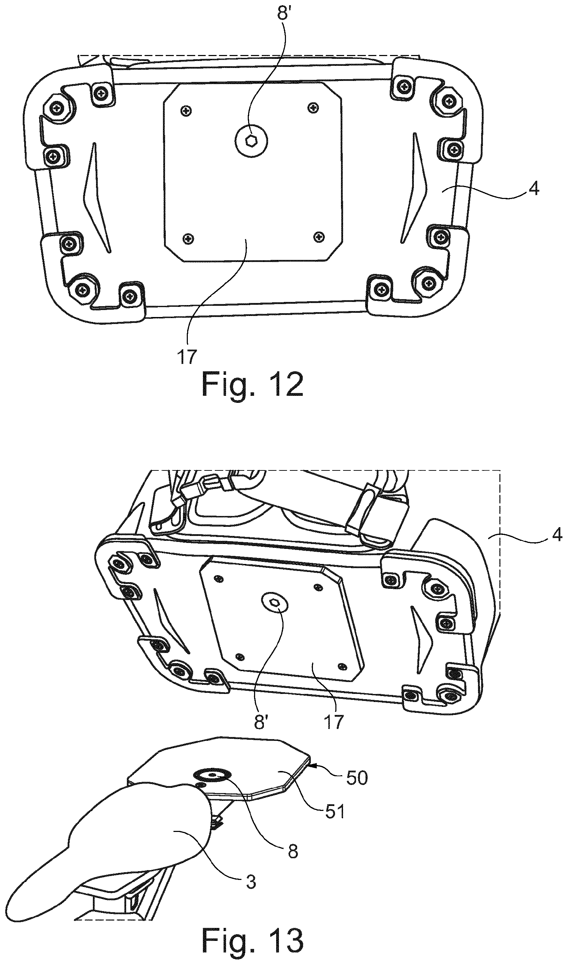

Die Figur 12 zeigt die Unterseite eines Rucksacks 4. An der Unterseite des Rucksacks 4 ist von außen eine Platte 17 befestigt, in die ein magnetisierbares Element 8' integriert ist. Die Platte 17 weist eine plane Oberfläche auf. Die Oberfläche des magnetisierbaren Elements 8' fluchtet mit der Oberfläche der Platte 17, so dass diese in einer gemeinsamen Ebene liegen.

Das magnetisierbare Element 8' besteht beispielsweise aus einem ferromagnetischen Material, beispielsweise Eisen. Es entspricht in Form und Größe dem Magnet 8 der Stützanordnung 50, ist somit im vorliegenden Ausführungsbeispiel ebenfalls kreisförmig ausgebildet. Durch die einander entsprechende Form und Größe können der Magnet 8 und das magnetisierbares Element 8' präzise zueinander positioniert werden, wodurch automatisch eine exakte Ausrichtung zwischen der Gepäckstütze 5 und dem Rucksack 4 bereitgestellt wird.

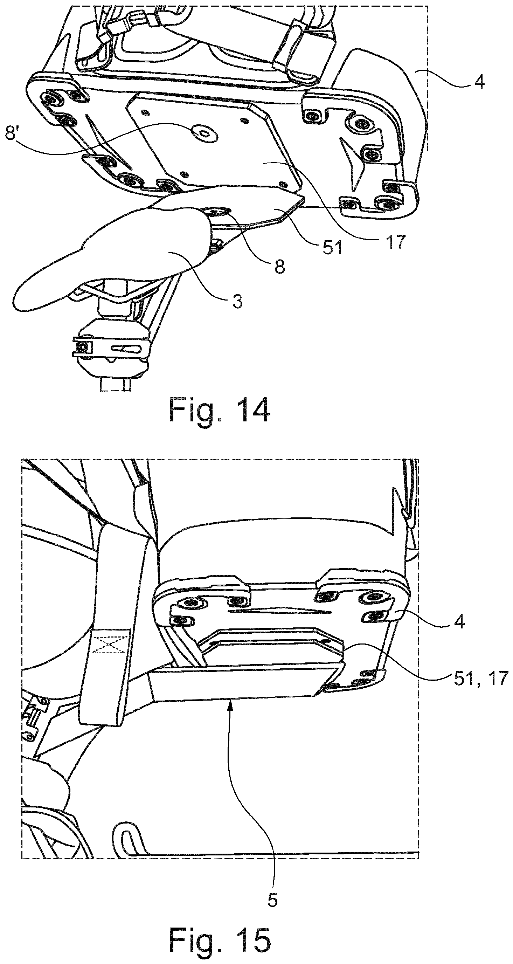

Die Figur 13 zeigt den Schritt, dass der Rucksack 4 und die Stützeinrichtung 50 einander genähert werden. Die Figur 14 zeigt den Schritt, dass die eine Kante der Platte 17 an die Hinterkante 14 der Stützfläche 51 angelegt wird. Dabei ist erkennbar, dass die Abmessungen von Platte 17 und Stützfläche 51 einander entsprechen.

Die Figur 15 zeigt den verbunden Zustand, in dem die Stützfläche 51 und die Platte 17 plan aufeinander anliegen und durch die magnetische Kraft zwischen den Magneten 8 und dem magnetisierbares Element 8' exakt zueinander positioniert sind.

Dabei kann vorgesehen sein, dass der Magnet 8 rückseitig gekapselt ist, um zu erreichen, dass die magnetische Feldstärke im Wesentlichen nach oben gerichtet ist. Bei dem Magneten 8 handelt es sich beispielsweise um eine Neodym-Magneten.

Eine magnetische Kraft zwischen der Stützanordnung 50 und dem Rucksack 4 kann ebenfalls erreicht werden kann, wenn das Element 8' ebenfalls als Permanentmagnet ausgebildet ist. Des Weiteren kann eine magnetische Kraft zwischen der Stützanordnung 50 und dem Rucksack 4 in entsprechender Weise erreicht werden, wenn das in der Platte 17 angeordnete Element 8' als Magnet und das in der Stützfläche 51 ausgebildete Element 8 als magnetisierbares Element, insbesondere als ferromagnetisches Element ausgebildet ist. Hierbei handelt es sich um alternative Ausgestaltungen der Erfindung.

Die durch den Magnet 8 und das magnetisierbares Element 8' bereitgestellte magnetische Haltekraft liegt beispielsweise bei mindestens 20 kg, insbesondere bei mindestens 30 kg.

In einer alternativen Ausgestaltung sind beispielsweise an der Stützfläche 51 einerseits und an der Platte 17 andererseits Formschlusselemente angebracht oder ausgebildet, die eine lösbare Schnapp- oder Rastverbindung zwischen dem Rucksack 4 und der Gepäckstütze 5 bereitstellen. Dabei können beliebige Varianten einer Schnappverbindung bzw. Rastverbindung eingesetzt werden. Beispielsweise ragt von der Platte 17 ein Stift hervor, der in einer Öffnung in der Stützfläche 51 einrastet, oder umgekehrt. Wichtig ist dabei, dass die Schnapp- oder Rastverbindung lösbar ausgebildet ist. Dazu kann zum einen vorgesehen sein, dass die Schnapp- oder Rastverbindung sich automatisch löst, wenn eine Trennkraft die durch die Schnapp- oder Rastverbindung bereitgestellte Haltekraft übersteigt, wobei beispielsweise flexible Elemente durch die Trennkraft aufgebogen werden. Zum anderen kann vorgesehen sein, dass durch Betätigung eines Druckknopfes, Schiebers oder dergleichen die Schnapp- oder Rastverbindung gelöst wird.

Die Figur 4 zeigt ein weiteres Ausführungsbeispiel. Bei diesem Ausführungsbeispiel ist die Stützanordnung 50 der Gepäckstütze 5 konkav ausgebildet. Sie bildet an ihrer konkaven Oberfläche 52 eine konkave Kalotte 12 aus. In entsprechender Weise weist der Rucksack 4 an seiner Unterseite eine konvexe Kalotte 11 auf. Über diese korrespondierende Formgebung der Kalotten 11, 12 wird der Rucksack 4 automatisch gegenüber der Stützanordnung 50 geeignet positioniert und gegen ein Verschieben gesichert. Über die Kalotten 11, 12 wird ein Formschluss bereitgestellt.

Die konvexe Kalotte 11 des Rucksacks 4 kann über ein entsprechend geformtes Teil des Rucksacks 4 bereitgestellt werden. Beispielsweise ist der Boden des Rucksacks 4 als Kalotte 11 ausgebildet. Alternativ ist in den Rucksack 4 eine Versteifungsvorrichtung integriert, die dem unteren Ende des Rucksacks eine definierte Form verleiht. Eine solche Versteifungsvorrichtung besteht beispielsweise aus einem Gestell, das in den Rucksack eingesetzt ist. Das Gestell kann dabei grundsätzlich aus einem beliebigen Material, wie z.B. Metall, Kunststoff oder einem Kompositmaterial bestehen.

Alternativ kann die Formgebung der Kalotten 11, 12 umgekehrt sein, d. h. die Kalotte 12 ist konvex und der Kalotte 11 konkav ausgebildet.

Weiter kann vorgesehen sein, dass in die Kalotten 11, 12 Magnete und magnetisierbare Elemente integriert sind, entsprechend der Figur 3 und den Figuren 10-15, wobei zusätzlich eine magnetische kraftschlüssige Verbindung zwischen den Kalotten 11, 12 bereitgestellt wird.

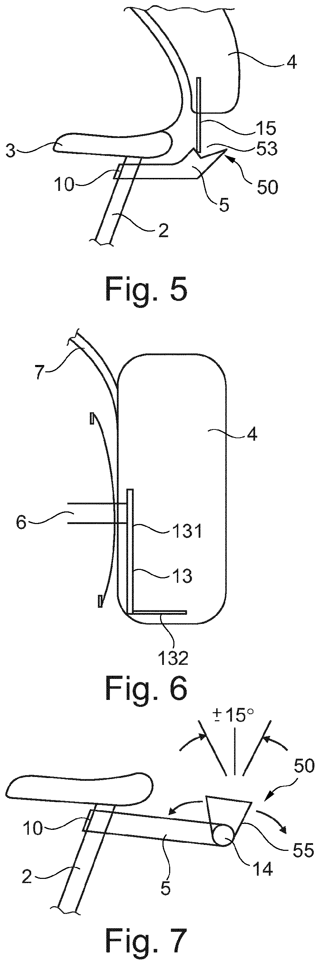

Die Figur 5 zeigt ein nicht beanspruchtes Beispiel, bei dem die Gepäckstütze eine Stützanordnung 50 ausbildet, die eine konisch ausgebildete Vertiefung 53 umfasst. Die Vertiefung ist dabei dafür vorgesehen und ausgebildet, das Ende einer mit dem Rucksack 4 verbundenen Teleskopstange 15 aufzunehmen. Bei dieser Variante wird somit nicht der Rucksack 4 selbst, sondern ein mit dem Rucksack 4 verbundenes Teil, nämlich die Teleskopstange 15 durch die Gepäckstütze 5 abgestützt.

Ein Vorteil dieser Gestaltung besteht darin, dass Rucksäcke mit einer Teleskopstange nachgerüstet werden können.

Für sämtliche Ausgestaltungen gilt, dass die Stützanordnung 50 beispielsweise in einer Höhe angeordnet ist, die der Höhe der Satteloberfläche entspricht oder bis zu 20 cm oberhalb oder unterhalb der Höhe der Satteloberfläche liegt.

Die Figur 6 zeigt ein Ausführungsbeispiel eines Gestells, das zur Ausbildung einer Versteifung des Rucksacks 4 an dessen unterem Ende in diesen eingesetzt ist. Das Gestell 13 ist als Winkelversteifung ausgebildet und umfasst zwei Versteifungsschenkel 131, 132, die rechtwinklig zueinander angeordnet sind. Der erste Versteifungsschenkel 131 ist dabei über den Bauchgurt bzw. Hüftgurt 6 des Rucksacks 4 fixiert. Der zweite Versteifungsschenkel 132 steht am unteren Ende des ersten Versteifungsschenkels 131 ab und definiert ein planes unteres Ende des Rucksacks 4. Das dargestellte Gestell 13 ist lediglich beispielhaft für eine Vielzahl von Gestellen und Strukturen, die zur Bereitstellung einer definierten Form im unteren Bereich des Rucksacks 4 in diesen eingeführt werden können.

Im Ausführungsbeispiel der Figuren 10 bis 15 kann vorgesehen sein, dass die am Rucksack 4 befestigte Platte 17 dadurch mit dem Rucksack 4 fest verbunden wird, dass sie mit dem Gestell 13, nämlich dessen Versteifungsschenkel 132 verschraubt wird.

Die Figur 7 zeigt ein Beispiel, bei dem die Stützanordnung 50 ein Kippgelenk 14 aufweist, das es erlaubt, die Stützanordnung 50 um eine Achse, die quer zur Längsachse des Fahrrads verläuft, zu kippen. Die Stützanordnung 50 ist dabei als Trichter 55 ausgebildet. Beispielsweise kann ähnlich wie bei der Figur 5 eine Abstützung des Rucksacks über eine Teleskopschiene erfolgen. Grundsätzlich kann ein Kippgelenk 14 jedoch bei allen beschriebenen Ausführungsvarianten eingesetzt werden. Die Bereitstellung eines Kippgelenks 14 erlaubt es, die Auflage und Abstützung des Rucksacks an der Gepäckstütze 5 auch in Situationen zu sichern, in denen der Fahrer Positionswechsel vornimmt und damit der Rucksack relativ zu der Gepäckstütze 5 bewegt wird.

Das Kippgelenk 14 ist derart ausgebildet, dass es eine Kippung lediglich über einen definierten Winkelbereich erlaubt, der beispielsweise bei ± 15°, also insgesamt 30° liegt. Dies ist jedoch lediglich beispielhaft zu verstehen.

Die Figur 8 stellt eine vergrößerte Darstellung des Bereichs X2 der Figur 1 dar. Danach bildet der Schultergurt 7 eine Lose 71, die durch einen Gummizug 16 überbrückt ist. Bei einem Zug auf den Rucksack 4 verlängert sich die Länge des Schultergurts 7, bis die Lose 71 gestreckt ist. Eine solche Ausgestaltung des Schultergurts 7 ermöglicht es, dass auch bei einem Vorbeugen des Fahrers entsprechend der Figur 2 die Abstützung des Rucksacks 4 an der Gepäckstütze 5 beibehalten bleibt. Denn durch die Gravitationskraft wird der Rucksack 4 nach unten gezogen und der Schultergurt 7 verlängert.

Die Figur 9 zeigt den Fahrer mit einem Fahrrad gemäß den Figuren 1 und 2 in einer Ansicht von vorne. Dabei sind vom Rucksack lediglich die Schultergurte 7 zu sehen. So ist der Rucksack aerodynamisch derart geformt, dass er gegenüber dem Körper des Fahrers keinen vergrößerten Luftwiderstand bereitstellt und dementsprechend auch seitlich nicht vorsteht.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Beispielsweise kann vorgesehen sein, dass die Gepäckstütze mit ihrem einem Ende nicht an der Sattelstütze, sondern direkt am Sattel befestigt ist. Auch kann vorgesehen sein, dass die Gepäckstütze einstückig mit dem Sattel oder der Sattelstütze ausgebildet ist. Eine weitere alternative Ausgestaltung sieht vor, dass die Gepäckstütze - insbesondere für die Abstützung von besonders schwerem Gepäck - mit dem Rahmen des Fahrrads verbunden ist. Hierzu ist sie beispielsweise mit der Hinterradnabe verstrebt.

## Patentansprüche

1. Gepäckstütze (5), die aufweist:
- ein erstes Ende (55), das dazu vorgesehen und ausgebildet ist, mit dem Sitz (2, 3) oder Rahmen (1) eines Fahrrads (20) verbunden zu werden,
- ein zweites Ende, das eine Stützanordnung (50) ausbildet, die dazu vorgesehen und ausgebildet ist, bei Anordnung der Gepäckstütze (5) an dem Sitz (2, 3) oder Rahmen (1) eines Fahrrads (20) einen auf dem Rücken des Fahrers des Fahrrads angeordneten Rucksack (4) während der Fahrt abzustützen,
**dadurch gekennzeichnet, dass**
in die Stützanordnung (50) Verbindungsmittel (8) integriert sind, die geeignet sind, in Verbindung mit entsprechenden Verbindungsmitteln (8') in oder an dem abzustützenden Rucksack (4) eine magnetische kraftschlüssige Verbindung oder eine Schnapp- oder Rastverbindung der Stützanordnung (50) mit dem abzustützenden Rucksack (4) bereitstellen.

2. Gepäckstütze nach Anspruch 1, **dadurch gekennzeichnet, dass** die Stützanordnung (50) eine plan ausgebildete Stützfläche (51) aufweist.

3. Gepäckstütze nach Anspruch 1, **dadurch gekennzeichnet, dass** die Stützanordnung (50) eine Stützfläche (52) ausbildet, die in Richtung eines abzustützenden Rucksacks (4) konkav oder konvex ausgebildet ist.

4. Gepäckstütze nach einem der vorangehenden Ansprüche, **dadurch gekennzeichnet, dass** in die Stützanordnung (50) ein Magnet (8) integriert ist, der dazu vorgesehen und ausgebildet ist, mit einem in oder an dem abzustützenden Rucksack (4) angeordneten Magneten (8') oder magnetisierbaren Material (8') zur Verbindung des Rucksacks (4) mit der Gepäckstütze (5) zusammen zu wirken.

5. Gepäckstütze nach einem der Ansprüche 1 bis 3, **dadurch gekennzeichnet, dass** in die Stützanordnung (50) ein magnetisierbares Material (8) integriert ist, das dazu vorgesehen und ausgebildet ist, mit einem in oder an dem abzustützenden Rucksack (4) angeordneten Magneten (8') zur Verbindung des Rucksacks (4) mit der Gepäckstütze (5) zusammen zu wirken.

6. Gepäckstütze nach Anspruch 4 oder 5, soweit rückbezogen auf Anspruch 2 oder 3, **dadurch gekennzeichnet, dass** der Magnet (8) bzw. das magnetisierbare Material (8) in die Stützfläche (51, 52) der Stützanordnung (50) integriert ist.

7. Gepäckstütze nach Anspruch 6, **dadurch gekennzeichnet, dass** die Stützfläche (51, 52) aus einem nicht magnetischen und nicht magnetisierbaren Material besteht.

8. Gepäckstütze nach Anspruch 7, **dadurch gekennzeichnet, dass** der Magnet (8) bzw. das magnetisierbare Material (8) eine Oberfläche aufweist, die höchstens 20 % der Gesamtoberfläche von Stützfläche (51, 52) und Magnet (8) bzw. magnetisierbarem Material beträgt.

9. Gepäckstütze nach einem der Ansprüche 4 bis 8, **dadurch gekennzeichnet, dass** das magnetisierbare Material (8, 8') jeweils durch ein ferromagnetisches Element gebildet ist.

10. Fahrrad (20), das aufweist:
- einen Rahmen (1),
- zwei Räder (21),
- einen Lenker (22),
- einen Antrieb (23),
- einen Sitz (2, 3), und
- eine Gepäckstütze (5) gemäß Anspruch 1, wobei
o das erste Ende (55) der Gepäckstütze (5) mit dem Sitz (2, 3) oder mit dem Rahmen (1) verbunden ist,
o die Stützanordnung (50) des zweiten Endes der Gepäckstütze (5) hinter dem Sitz angeordnet und dazu vorgesehen und ausgebildet ist, einen auf dem Rücken des Fahrers des Fahrrads angeordneten Rucksack (4) während der Fahrt abzustützen, und
o die Verbindungsmittel (8) geeignet sind, in Verbindung mit entsprechenden Verbindungsmitteln (8') in oder an dem abzustützenden Rucksack (4) eine magnetische kraftschlüssige Verbindung oder eine Schnapp- oder Rastverbindung der Stützanordnung (50) mit dem abzustützenden Rucksack (4) bereitzustellen.

11. Transportsystem, das aufweist:
- ein Fahrrad (20) gemäß Anspruch 10, das eine Gepäckstütze (5) mit einer Stützanordnung (50) ausbildet; und
- einen Rucksack (4),
- wobei das Fahrrad (20) und der Rucksack (4) dazu ausgebildet sind, derart zusammenwirken, dass die Stützanordnung (50) und der Rucksack (4) über eine magnetische kraftschlüssige Verbindung oder eine Schnapp- oder Rastverbindung miteinander verbindbar sind, wobei die Gepäckstütze (5) den auf dem Rücken des Fahrers des Fahrrads (20) angeordneten Rucksack (4) oder ein mit diesem verbundenes Stützelement (15) während der Fahrt abstützt.

12. Transportsystem nach Anspruch 11, **dadurch gekennzeichnet, dass** der Rucksack (4) an seinem unteren, der Gepäckstütze (5) zugewandten Ende eine Versteifung (11, 13) aufweist, die dem unteren Ende des Rucksacks eine definierte Form verleiht, die mit einer entsprechenden Form der Stützanordnung (50) der Gepäckstütze (5) korrespondiert.

13. Transportsystem nach Anspruch 12, **dadurch gekennzeichnet, dass** die Versteifung durch ein Gestell (13) bereitgestellt wird, das in den Rucksack integriert ist.

14. Transportsystem nach einem der Ansprüche 11 bis 13, **dadurch gekennzeichnet, dass** in die Stützanordnung (50) ein Magnet (8) und in den Rucksack (4) ein Magnet (8') oder ein magnetisierbares Material (8') integriert ist, die zur Verbindung des Rucksacks (4) mit der Gepäckstütze (5) zusammenwirken, oder umgekehrt.

15. Transportsystem nach Anspruch 14, **dadurch gekennzeichnet, dass** der in den Rucksack (4) integrierte Magnet (8') oder das in den Rucksack (4) integrierte magnetisierbare Material (8') in eine Platte (17) integriert ist, die an der Unterseite des Rucksacks (4) außen an diesem befestigt ist.

## Claims

1. Baggage support (5) having:
- a first end (55), which is provided and designed to be connected to the seat (2, 3) or frame (1) of a bicycle (20),
- a second end, which forms a supporting arrangement (50) which is provided and designed so that, when the baggage support (5) is arranged on the seat (2, 3) or frame (1) of a bicycle (20), a rucksack (4) arranged on the back of the person riding the bicycle is supported during the journey,
**characterized in that**
the supporting arrangement (50) has integrated connecting means (8), which are suitable, in conjunction with corresponding connecting means (8') in or on the rucksack (4) to be supported, for establishing a magnetic force-fitting connection or a snap-fit or latching connection between the supporting arrangement (50) and the rucksack (4) to be supported.

2. Baggage support according to Claim 1, **characterized in that** the supporting arrangement (50) has a supporting surface (51) of planar design.

3. Baggage support according to Claim 1, **characterized in that** the supporting arrangement (50) forms a supporting surface (52) which is of concave or convex design in the direction of a rucksack (4) to be supported.

4. Baggage support according to one of the preceding claims, **characterized in that** the supporting arrangement (50) has an integrated magnet (8), which is provided and designed to interact with magnetizable material (8') or a magnet (8'), arranged in or on the rucksack (4) to be supported, for the purpose of connecting the rucksack (4) to the baggage support (5).

5. Baggage support according to one of Claims 1 to 3, **characterized in that** the supporting arrangement (50) has an integrated magnetizable material (8), which is provided and designed to interact with a magnet (8'), arranged in or on the rucksack (4) to be supported, for the purpose of connecting the rucksack (4) to the baggage support (5).

6. Baggage support according to Claim 4 or 5, if referred back to Claim 2 or 3, **characterized in that** the magnet (8) or the magnetizable material (8) is integrated in the supporting surface (51, 52) of the supporting arrangement (50).

7. Baggage support according to Claim 6, **characterized in that** the supporting surface (51, 52) consists of a non-magnetic and non-magnetizable material.

8. Baggage support according to Claim 7, **characterized in that** the magnet (8) or the magnetizable material (8) has a surface area which is at most 20% of the overall surface area of the supporting surface (51, 52) and magnet (8) or magnetizable material.

9. Baggage support according to one of Claims 4 to 8, **characterized in that** the magnetizable material (8, 8') is formed in each case by a ferromagnetic element.

10. Bicycle (20) having:
- a frame (1),
- two wheels (21),
- a handlebar (22),
- a drive (23),
- a seat (2, 3), and
- a baggage support (5) according to Claim 1, wherein
o the first end (55) of the baggage support (5) is connected to the seat (2, 3) or to the frame (1),
o the supporting arrangement (50) of the second end of the baggage support (5) is arranged behind the seat and is provided and designed so that a rucksack (4) arranged on the back of the person riding the bicycle is supported during the journey, and
o the connecting means (8) are suitable, in conjunction with corresponding connecting means (8') in or on the rucksack (4) to be supported, for establishing a magnetic force-fitting connection or a snap-fit or latching connection between the supporting arrangement (50) and the rucksack (4) to be supported.

11. Transporting system having:
- a bicycle (20) according to Claim 10, which forms a baggage support (5) with a supporting arrangement (50); and
- a rucksack (4),
- wherein the bicycle (20) and the rucksack (4) are designed to interact such that the supporting arrangement (50) and the rucksack (4) can be connected to one another via a magnetic force-fitting connection or a snap-fit or latching connection, wherein the rucksack (4) arranged on the back of the person riding the bicycle (20), or a supporting element (15) connected to the rucksack, is supported by the baggage support (5) during the journey.

12. Transporting system according to Claim 11, **characterized in that** at its lower end, which is directed towards the baggage support (5), the rucksack (4) has a reinforcement (11, 13), which gives the lower end of the rucksack a defined shape, which corresponds with a corresponding shape of the supporting arrangement (50) of the baggage support (5) .

13. Transporting system according to Claim 12, **characterized in that** the reinforcement is provided by a framework (13), which is integrated in the rucksack.

14. Transporting system according to one of Claims 11 to 13, **characterized in that** the supporting arrangement (50) has an integrated magnet (8), and the rucksack (4) has an integrated magnet (8') or a magnetizable material (8'), which interact for the purpose of connecting the rucksack (4) to the baggage support (5), or vice versa.

15. Transporting system according to Claim 14, **characterized in that** the magnet (8') integrated in the rucksack (4), or the magnetizable material (8') integrated in the rucksack (4), is integrated in a plate (17), which is fastened externally on the underside of the rucksack (4).

## Revendications

1. Porte-bagages (5), qui présente :
- une première extrémité (55), qui est prévue et configurée pour être reliée à la selle (2, 3) ou au cadre (1) d'une bicyclette (20),
- une deuxième extrémité, qui forme un agencement de support (50) qui est prévu et configuré pour, lors de l'agencement du porte-bagages (5) sur la selle (2, 3) ou le cadre (1) d'une bicyclette (20), supporter un sac à dos (4) agencé sur le dos du conducteur de la bicyclette pendant le trajet,
**caractérisé en ce que**
des moyens de liaison (8) sont intégrés dans l'agencement de support (50), qui sont appropriés pour fournir, en liaison avec des moyens de liaison correspondants (8'), dans ou sur le sac à dos (4) à supporter, une liaison magnétique par force ou une liaison par enclenchement ou encliquetage de l'agencement de support (50) avec le sac à dos (4) à supporter.

2. Porte-bagages selon la revendication 1, **caractérisé en ce que** l'agencement de support (50) présente une surface de support configurée sous forme plane (51).

3. Porte-bagages selon la revendication 1, **caractérisé en ce que** l'agencement de support (50) forme une surface de support (52) qui est configurée sous forme concave ou convexe en direction d'un sac à dos (4) à supporter.

4. Porte-bagages selon l'une quelconque des revendications précédentes, **caractérisé en ce qu'**un aimant (8) est intégré dans l'agencement de support (50), lequel est prévu et configuré pour coopérer avec un aimant (8') ou matériau magnétisable (8') agencé dans ou sur le sac à dos (4) à supporter pour relier le sac à dos (4) au porte-bagages (5).

5. Porte-bagages selon l'une quelconque des revendications 1 à 3, **caractérisé en ce qu'**un matériau magnétisable (8) est intégré dans l'agencement de support (50), lequel est prévu et configuré pour coopérer avec un aimant (8') agencé dans ou sur le sac à dos (4) à supporter pour relier le sac à dos (4) au porte-bagages (5) .

6. Porte-bagages selon la revendication 4 ou 5, dans la mesure où elle se rapporte à la revendication 2 ou 3, **caractérisé en ce que** l'aimant (8) ou le matériau magnétisable (8) est intégré dans la surface de support (51, 52) de l'agencement de support (50).

7. Porte-bagages selon la revendication 6, **caractérisé en ce que** la surface de support (51, 52) est constituée d'un matériau non magnétique et non magnétisable.

8. Porte-bagages selon la revendication 7, **caractérisé en ce que** l'aimant (8) ou le matériau magnétisable (8) présente une surface qui est d'au plus 20 % de la surface totale de la surface de support (51, 52) et de l'aimant (8) ou du matériau magnétisable.

9. Porte-bagages selon l'une quelconque des revendications 4 à 8, **caractérisé en ce que** le matériau magnétisable (8, 8') est formé respectivement par un élément ferromagnétique.

10. Bicyclette (20), qui présente :
- un cadre (1),
- deux roues (21),
- un guidon (22),
- une transmission (23),
- une selle (2, 3), et
- un porte-bagages (5) selon la revendication 1,
o la première extrémité (55) du porte-bagages (5) étant reliée à la selle (2, 3) ou au cadre (1),
o l'agencement de support (50) de la deuxième extrémité du porte-bagages (5) étant agencé derrière la selle et étant prévu et configuré pour supporter un sac à dos (4) agencé sur le dos du conducteur de la bicyclette pendant le trajet, et
o les moyens de liaison (8) étant appropriés pour fournir, en liaison avec des moyens de liaison correspondants (8') dans ou sur le sac à dos (4) à supporter, une liaison magnétique par force ou une liaison par enclenchement ou encliquetage de l'agencement de support (50) avec le sac à dos (4) à supporter.

11. Système de transport, qui présente :
- une bicyclette (20) selon la revendication 10, qui forme un porte-bagages (5) avec un agencement de support (50) ; et
- un sac à dos (4),
- la bicyclette (20) et le sac à dos (4) étant configurés pour coopérer de telle sorte que l'agencement de support (50) et le sac à dos (4) peuvent être reliés l'un à l'autre par une liaison magnétique par force ou par une liaison par enclenchement ou encliquetage, le porte-bagages (5) supportant le sac à dos (4) agencé sur le dos du conducteur de la bicyclette (20) ou un élément de support (15) relié à celui-ci pendant le trajet.

12. Système de transport selon la revendication 11, **caractérisé en ce que** le sac à dos (4) présente à son extrémité inférieure, tournée vers le porte-bagages (5), un raidisseur (11, 13) qui confère à l'extrémité inférieure du sac à dos une forme définie qui correspond à une forme correspondante de l'agencement de support (50) du porte-bagages (5).

13. Système de transport selon la revendication 12, **caractérisé en ce que** le raidisseur est fourni par un châssis (13) qui est intégré dans le sac à dos.

14. Système de transport selon l'une quelconque des revendications 11 à 13, **caractérisé en ce qu'**un aimant (8) est intégré dans l'agencement de support (50) et un aimant (8') ou un matériau magnétisable (8') est intégré dans le sac à dos (4), qui coopèrent pour relier le sac à dos (4) au porte-bagages (5), ou vice versa.

15. Système de transport selon la revendication 14, **caractérisé en ce que** l'aimant (8') intégré dans le sac à dos (4) ou le matériau magnétisable (8') intégré dans le sac à dos (4) est intégré dans une plaque (17) qui est fixée à l'extérieur du sac à dos (4) sur le côté inférieur de celui-ci.
